# EUROPEAN PATENT APPLICATION

(11) **EP 4 811 682 A1**
(43) Date of publication of application: **23.09.2026**
(21) Application number: 25222306.0
(22) Date of filing: 10.12.2025
(51) Int. Cl.: H04B 10/2581, H04J 14/00

(54) **SYSTEM AND METHOD FOR ORBITAL ANGULAR MOMENTUM (OAM) ENCODING WITH PHASE TRANSFORMATION SURFACES**

(30) Priority: 20.03.2025 US 202563775008 P
(71) Applicant: II-VI Delaware, Inc., Wilmington, DE 19890 (US)
(72) Inventor: Iazikov, Dmitri, Wilmington, 19890 (US); Maineult, Wilfried Nicolas Sébastien, Wilmington, 19890 (US); Teissier, Jean, Wilmington, 19890 (US)
(74) Representative: Maikowski & Ninnemann Patentanwälte Partnerschaft mbB

(57) **Abstract**

Disclosed is an optical data transmission system and method for modifying and/or converting incoming light beams having first intensity profiles into light beams having second intensity profiles, wherein the second intensity profile of each light beam has a unique orbital angular momentum (OAM), for transmitting the light beam's signals having the second intensity profiles over an optical fiber, and for modifying and/or converting the light beams exiting the optical fiber having the second intensity profiles to light beams having third intensity profiles.

## Description

### BACKGROUND

### Field

The present disclosure relates to an optical data transmission system and method for transmitting multiple light beam signals from an array of optical emitters to an array of optical receivers over an optical fiber utilizing the property of orbital angular momentum (OAM) to maintain the uniqueness of each light beam signal transmitted over the optical fiber while maintaining the integrity of data being transmitted on the multiple light beam signals from the array of optical emitters to the array of optical receivers via the optical fiber.

### Background

There is an existing and growing need for increasing the rate that data is transmitted over current optical fiber infrastructure in order to meet the demand of datacenters and Artificial Intelligence, that may not require high gigabit per second data rates, using exiting optical emitter technology, such as, for example, existing vertical cavity surface emitting lasers (VCSELs), and optical receiver technology, such as, for example, existing photodiodes.

For example, on the optical emitter (or transmit) side, individual VCSELs may reach their maximum bandwidth for 200 gigabits per second (200 Gb/s), with four level pulse amplitude modulation, sometimes known as 200G PAM 4 modulation. On the optical receiver (or receiving) side, it is difficult to make efficient 400 Gb/s photodiodes. To this end, semiconductor photodiodes have limits of about 256 Gb/s for edge-entry Germanium (Ge) photodiodes and about 200 Gb/s for InGaAs (Indium Gallium Arsenide) photodiodes. Moreover, graphene photodiodes have current limits of about 5 milliamps per watt at 500 gigahertz bandwidth.

Moreover, directly coupling different light beams output by different VCSELs into an optical fiber, such as a multimode optical fiber (MMF), may lead to undesirable different propagation times and/or distortion of the different light beams in the optical fiber.

It would, therefore, be desirable to overcome the above problems and others while enabling effective transmission of data on light beams over long distances, e.g., 50 or 100 meters or more.

### SUMMARY

Disclosed is an optical transmission system comprising an array of optical emitters disposed on a first substrate, wherein each optical emitter may be operative and/or configured for converting an electrical signal received by the optical emitter into a corresponding optical signal having a first phase profile. An optical multiplexer may have an input side disposed to receive the optical signals from the array of optical emitters and an output side. The optical multiplexer may include one or more phase transformation surfaces (PTSs) operative and/or configured for converging the optical signals received at the input side of the optical multiplexer, for modifying and/or converting the first phase profile of each optical signal to a second phase profile, and for outputting the converged optical signals having the second phase profiles from the output side of the optical multiplexer. Each converged optical signal having the second phase profile output from the output side of the optical multiplexer may have a unique phase that may be different than the phase of each other converged optical signal having the second phase profile output from the output side of the optical multiplexer. An optical fiber may have an input end disposed to receive the optical signals having the second phase profiles output from the output side of the optical multiplexer and to output the optical signals having the second phase profiles from an output end of the optical fiber. An optical demultiplexer may have an input side disposed to receive the optical signals having the second phase profiles output from the output end of the optical fiber and an output side. The optical demultiplexer may include one or more PTSs operative and/or configured for modifying and/or converting the second phase profile of each optical signal to a third phase profile and for outputting the optical signals having the third phase profiles from the output side of the optical demultiplexer. An array of optical receivers may be disposed on a second substrate for receiving the optical signals having the third phase profiles output from the output side of the optical demultiplexer. Each optical receiver may be operative and/or configured for receiving and converting one of the optical signals having the third phase profile output from the output side of the optical demultiplexer into a corresponding electrical signal.

Also disclosed is an optical transmission method comprising: (a) converting, by an array of optical emitters, a set of electrical signals into a corresponding first set of optical signals having first phase profiles; (b) modifying and/or converting, by an optical multiplexer, the first set of optical signals of step (a) having the first phase profiles to a second set of optical signals having second phase profiles that are different than the first phase profiles, wherein each optical signal of the second set of optical signals has a unique second phase profile; (c) transmitting, through an optical fiber, the second set of optical signals having the second phase profiles of step (b); (d) modifying and/or converting, by an optical demultiplexer, the second set of optical signals having the second phase profiles transmitted in step (c) to a third set of optical signals having third phase profiles; (e) receiving, by an array of optical receivers, the third set of optical signals having the third phase profiles of step (d); and (f) converting, by the array of optical receivers, the third set of optical signals having the third phase profiles received in step (e) into a copy of the set of electrical signals of step (a).

### BRIEF DESCRIPTION OF THE DRAWINGS

Fig. 1 is a schematic view of an optical transmission system in accordance with the principles of the present disclosure;
Figs. 2-5 are schematic perspective views of different example phase transformation surfaces (PTSs) in accordance with the principles of the present disclosure;
Figs. 6A-6B are schematic perspective views of isolated portions, e.g. minor segments, of larger circular or disk-shaped example PTSs in accordance with the principles of the present disclosure; and
Fig. 7 is a perspective view of yet another example PTS in accordance with the principles of the present disclosure including a pattern of different refractive indices n₁-nₙ.

### DETAILED DESCRIPTION

Various non-limiting embodiments will now be described with reference to the accompanying figures where like reference numbers correspond to like or functionally equivalent elements or features.

As used herein, spatial, or directional terms, such as "left", "right", "inner", "outer", "above", "below", "top side", "bottom side", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, "coupled", "coupling", and similar terms refer to two or more elements that are joined, linked, fastened, connected, put in communication, or otherwise associated (e.g., mechanically, electromagnetically, fluidly, optically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

In this disclosure, the terms "light beam(s)", "optical signal(s)", and the like may be used interchangeably.

Orbital Angular Momentum (OAM) describes the angular momentum of a particle or system associated with its motion in an orbit or trajectory. In an optical data transmission system, the OAM of an optical signal or light beam refers to the angular momentum associated with a helical or twisted phase front of the optical signal or light beam. OAM in an optical data transmission system exploits the spatial properties of light or electromagnetic waves to encode data in the orbital angular momentum states of the optical signals or light beams.

In accordance with the present disclosure, OAM allows optical signals or light beams to be multiplexed in distinct modes, with each optical signal or light beam being characterized by a unique topological charge (*ℓ*). In accordance with the present disclosure, each mode may be orthogonal, whereupon optical signals or light beams having multiple OAM states may coexist without interference, whereupon multiple data streams may be transmitted on an optical fiber simultaneously over the same frequency channel or multiple frequency channels.

In an optical transmission system, OAM is a property of light beams that arises from their spatial structure, specifically their phase and intensity distributions. This differs from spin angular momentum (SAM), which is associated with the polarization of light.

An OAM modulated light beam may have a helical (twisted) phase front that may be described by the phase term: exp(iℓϕ) where: ℓ is the topological charge, an integer that represents the number of twists in the phase per wavelength; and ϕ is the azimuthal angle in cylindrical coordinates. OAM modulated light beams with ℓ = 0 have no OAM, while ℓ > 0 or ℓ < 0 represent clockwise or counterclockwise helicity, respectively.

Additional information regarding OAM may be found in Guo et al. "Spin-Decoupled Metasurface For Simultaneous Detection Of Spin And Orbital Angular Momenta Via Momentum Transformation", Science & Applications (2021) 10:63; Official journal of the CIOMP 2047-7538 https://doi.org/10.1038/s41377-021-00497-7; www.nature.com/lsa, which is incorporated herein by reference.

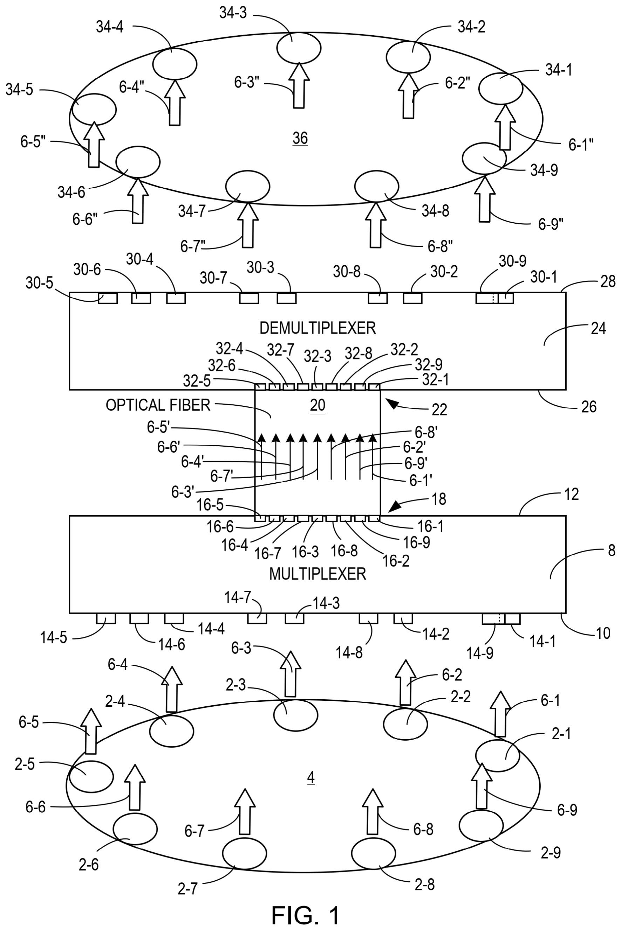

With reference to Fig. 1, an optical transmission system in accordance with the principles of this disclosure may include an array of optical emitters 2 disposed on a first substrate 4. In an example, each emitter 2 may be a laser, such as a vertical cavity surface emitting laser (VCSEL), and the first substrate 4 may be a printed circuit board (PCB) or any other suitable and/or desirable substrate material capable of supporting the array of optical emitters 2. However, this is not to be construed in a limiting sense.

In an example, the array of optical emitters 2 may include emitters 2-1 - 2-9, the first substrate 4 may have a circular shape, and the emitters 2-1 - 2-9 may be positioned or dispersed, uniformly or non-uniformly, at or adjacent around the periphery of the substrate 4. However, the number of optical emitters 2 in the array may be any number deemed suitable and/or desirable for a particular application, including only a single emitter 2, and the first substrate 4 may have any suitable and/or desirable shape, such as, for example, oval, square, or rectangular. Moreover, the emitter(s) 2 may be disposed anywhere on the substrate 4 deemed suitable and/or desirable for a particular application.

Strictly for the purpose of this disclosure, it will be assumed that the array of optical emitters 2 includes emitters 2-1 - 2-9 around the periphery of the substrate 4. However, this is not to be construed in a limiting sense.

In an example, each optical emitter 2 may be operative and/or configured for converting an incoming electrical signal received by the optical emitter 2 into a corresponding light beam or optical signal 6 having a first phase profile. For example, emitters 2-1 - 2-9 receiving different electrical signals from different external sources may output respective optical signals 6-1 - 6-9 having corresponding first phase profiles.

As best understood, each first phase profile may have a shape or form comprising: (1) zero or no OAM; (2) an OAM having a clockwise helicity; or (3) an OAM having a counterclockwise (or anticlockwise) helicity. Accordingly, in this disclosure, the term "first phase profile" is not to be construed in a limiting sense.

In accordance with the principles of this disclosure, it is believed that the first phase profile of each optical signal 6 may have zero or no OAM. However, this is not to be construed in a limiting sense since it is envisioned that the first phase profile of any one or more of the optical signals 6 may comprise OAM having clockwise helicity or counterclockwise helicity. Also, first phase profiles of optical signals 6-1 - 6-9 having the combination of zero or no OAM and OAM having clockwise or counterclockwise helicity is envisioned.

The optical transmission system may include an optical multiplexer 8 having an input side 10 and an output side 12. The input side 10 of the optical multiplexer 8 may be disposed to receive the optical signals 6-1 - 6-9 from the array of emitters 2-1 - 2-9 after passage of said optical signals 6-1 - 6-9 through an optional space between the optical emitters 2-1 - 2-9 and the input side 10 of the optical multiplexer 8. The optical multiplexer 8 may be formed of any suitable and/or desirable material known in the art for forming optical multiplexers.

The optical multiplexer 8 may include one or more phase transformation surfaces (PTSs) operative and/or configured for converging the optical signals 6-1 - 6-9 received at the input side 10 of the optical multiplexer 8, for modifying and/or converting the first phase profile of each optical signal 6-1 - 6-9 to a second phase profile, and for outputting the converged optical signals having the second phase profiles from the output side 12 of the optical multiplexer 8. In an example, each converged optical signal 6 output from the output side 12 of the optical multiplexer 8 signal may have a unique phase that is different than the phase of each other converged optical signal 6 output from the output side 12 of the optical multiplexer 8.

In an example, the one or more PTSs of the optical multiplexer 8 may include a first set of one or more PTSs 14 operative and/or configured for causing the optical signals 6 received at the input side 10 of the optical multiplexer 8 to converge to a second set of one or more PTSs 16 which may be operative and/or configured for modifying and/or converting the first phase profiles of the optical signals 6 received at the input side 10 of the optical multiplexer 8 to optical signals 6' having second phase profiles, collimating the optical signals 6' having the second phase profiles, and outputting the collimated optical signals 6' having the second phase profiles to an input end 18 of an optical fiber 20 of the optical transmission system. In an example, the optical fiber 20 may, desirably, be a multi-mode optical fiber.

In an example, the first set of one or more PTSs 14 may include surfaces 14-1 - 14-9 distributed and operative and/or configured for causing the optical signals 6-1 - 6-9 received at the input side 10 of the optical multiplexer 8 to converge to the second set of one or more PTSs 16-1 - 16-9 which may be distributed and operative and/or configured for modifying and/or converting the first phase profiles of the optical signals 6-1 - 6-9 received at the input side of the optical multiplexer to optical signals 6-1' - 6-9' having the second phase profiles, collimating the optical signals 6-1' - 6-9' having the second phase profiles, and outputting the collimated optical signals 6-1' - 6-9' having the second phase profiles to the input end 18 of the optical fiber 20.

In another example, the first set of one or more PTSs 14 including surfaces 14-1 - 14-9 may modify and/or convert the optical signals 6-1 - 6-9 having the first phase profiles to the optical signals 6-1' - 6-9' having second phase profiles, whereupon, after passage of the optical signals 6-1' - 6-9' having second phase profiles through the multiplexer 8, the second set of one or more PTSs 16 may only need to be operative and/or configured for causing the optical signals 6-1' - 6-9' having second phase profiles to converge and be output to the input end 18 of the optical fiber 20, i.e., the second set of one or more PTSs 16 may not be required to modify and/or convert the optical signals 6-1 - 6-9 having the first phase profiles to the optical signals 6-1' - 6-9' having second phase profiles.

In yet another example, both of the functions or operations of (a) modifying and/or converting the optical signals 6-1 - 6-9 having the first phase profiles to the optical signals 6-1' -6-9' having second phase profiles and (b) converging the optical signals 6-1' - 6-9' having second phase profiles to be output to the input end 18 of the optical fiber 20 may be distributed between the first and second sets of PTSs 14 and 16, with each set of PTSs 14 and 16 performing some portion of both functions or operations (a) and (b).

The illustration in Fig. 1 of the first set of PTSs 14-1 - 14-9 being more widely distributed or arranged on the input side 10 of the multiplexer 8 and the second set of PTSs 16-1 - 16-9 being less widely distributed (or more densely arranged) on the output side 12 of the multiplexer 8 is not to be construed in a limiting sense since it is envisioned that the first and second sets of PTSs 14 and 16 may be distributed on the input and output sides of the multiplexer in any manner deemed suitable and/or desirable for a particular application.

In accordance with the principles of this disclosure, it is believed that the second phase profile of each optical signal 6' may comprise OAM having clockwise helicity or counterclockwise (or anticlockwise) helicity and, optionally, some portion of the optical signal 6' may comprise zero or no OAM. To this end, and in accordance with the principles of this disclosure, it is believed that the second phase profile of each optical signal 6' (e.g., optical signal 6-1') will include more OAM (perhaps exclusively OAM) than the first phase profile of the corresponding optical signal 6 (e.g., optical signal 6-1), which may include zero or no OAM or some OAM. Advantages of this may include, for example, without limitation: (1) greater separation or isolation of the optical signals 6-1' - 6-9' having second phase profiles transmitted in the optical fiber 20 (e.g., an SMF 28 fiber) or in any free space in the path of the optical signals 6-1' - 6-9', over distances greater than 50 meters, e.g., 90 meters, versus transmitting the optical signals 6-1 - 6-9 having first phase profiles in the same medium(s), i.e., the optical fiber 20 and/or free space; (2) enhanced bit error rate of transmitting optical signals 6-1' - 6-9' having second phase profiles in the medium(s) versus transmitting optical signals 6-1 - 6-9 having first phase profiles in the medium(s); and (3) more controlled modal dispersion of transverse electric (TE) / transverse magnetic (TM) modes in one or more bands (e.g., the O+C+L band) of the optical signals 6-1' - 6-9' having second phase profiles transmitted in the medium(s) versus transmitting the optical signals 6-1 - 6-9 having first phase profiles in the medium(s).

The optical transmission system may include the optical fiber 20 having the input end 18 disposed to receive the optical signals 6-1' - 6-9' having the second phase profiles output from the output side 12 of the optical multiplexer 8 and to output the optical signals 6-1' - 6-9' having the second phase profiles from an output end 22 of the optical fiber 20.

The optical transmission system may also include an optical demultiplexer 24 which has an input side 26 disposed to receive the optical signals 6' having the second OAMs from the output end 22 of the optical fiber 20 and an output side 28. The optical demultiplexer 24 may include one or more PTSs operative and/or configured for diverging the optical signals 6-1' - 6-9' received at the input side 26 of the optical demultiplexer 24, for modifying and/or converting the second phase profile of each optical signal 6' to a third phase profile 6", and for outputting the diverged optical signals having the third phase profiles 6" from the output side 28 of the optical demultiplexer 24.

In an example, the one or more PTSs of the optical demultiplexer 24 may include a third set of one or more PTSs 32 operative and/or configured for causing the optical signals 6' received at the input side 26 of the optical demultiplexer 24 to diverge to a fourth set of one or more PTSs 30 which may be operative and/or configured for modifying and/or converting the second phase profiles of the optical signals 6' received at the input side 26 of the optical demultiplexer 24 to optical signals 6" having third phase profiles, collimating the optical signals 6" having the third phase profiles, and outputting the collimated optical signals 6" having the third phase profiles to an array of optical receivers 34 (e.g., photodiodes) disposed on a second substrate 36 which may be a printed circuit board (PCB) or any other suitable and/or desirable substrate material capable of supporting the array of optical receivers 34. However, this is not to be construed in a limiting sense.

In an example, the third set of one or more PTSs 32 may include surfaces 32-1 - 32-9 distributed and operative and/or configured for causing the optical signals 6-1' - 6-9' received at the input side 26 of the optical demultiplexer 24 to diverge to the fourth set of one or more PTSs 30-1 - 30-9 which may be distributed and operative and/or configured for modifying and/or converting the second phase profiles of the optical signals 6-1' - 6-9' received at the input side 26 of the optical demultiplexer 24 to optical signals 6-1" - 6-9" having the third phase profiles, collimating the 6-1" - 6-9" having the third phase profiles, and outputting the collimated optical signals 6-1" - 6-9" having the third phase profiles to the optical receivers 34-1 - 34-9.

In another example, the third set of one or more PTSs 32 including surfaces 32-1 - 32-9 may modify and/or convert the optical signals 6-1' - 6-9' having the second phase profiles to the optical signals 6-1" - 6-9" having third phase profiles, whereupon, after passage of the optical signals 6-1" - 6-9" having third phase profiles through the demultiplexer 24, the fourth set of one or more PTSs 30 may only need to be operative and/or configured for causing the optical signals 6-1" - 6-9" having third phase profiles to diverge and be output to the optical receivers 34-1 - 34-9, i.e., the fourth set of one or more PTSs 30 may not be required to modify and/or convert the optical signals 6-1' - 6-9' having the second phase profiles to the optical signals 6-1" - 6-9" having third phase profiles.

In yet another example, both of the functions or operations of (a) modifying and/or converting the optical signals 6-1' - 6-9' having the second phase profiles to the optical signals 6-1" - 6-9" having third phase profiles and (b) converging the optical signals 6-1" - 6-9" having third phase profiles to be output to the optical receivers 34-1 - 34-9 may be distributed between the third and fourth sets of PTSs 32 and 30, with each set of the PTSs 32 and 30 performing some portion of both functions or operations (a) and (b).

The illustration in Fig. 1 of the fourth set of PTSs 30-1 - 30-9 being more widely distributed or arranged on the output side 28 of the demultiplexer 24 and the third set of PTSs 31-1 - 32-9 being less widely distributed (or more densely arranged) on the input side 26 of the demultiplexer 24 is not to be construed in a limiting sense since it is envisioned that the third and fourth sets of PTSs 30 and 32 may be distributed on the input and output sides 26 and 28 of the demultiplexer 24 in any manner deemed suitable and/or desirable for a particular application.

In accordance with the principles of this disclosure, it is believed that the third phase profile of each optical signal 6" (e.g., optical signal 6-1") may include less OAM, including zero or no OAM, than the second phase profile of the corresponding optical signal 6' (e.g., optical signal 6-1'). In this disclosure, each optical signals 6-x having a first phase profile may be modified and/or converted by the optical multiplexer 8 to a corresponding optical signals 6-x' having a second phase profile which, in-turn, may be modified and/or converted by the optical demultiplexer 24 to a corresponding optical signals 6-x" having a third phase profile, wherein, in this disclosure, x may be any positive whole number > 0, e.g., 1, 2, 3, 4, 5, etc. In an example, the third phase profile of each optical signal 6" (e.g., optical signal 6-1") may (but not necessarily) be the same or substantially the same as the first phase profile of the corresponding optical signal 6 (e.g., optical signal 6-1").

In accordance with the principles of this disclosure, data modulated on any optical signal 6 having a first phase profile may be demodulated without modification and/or change from the corresponding optical signal 6" having a third phase profile. In other words, during modification and/or conversion of an optical signal 6 having a first phase profile to a corresponding optical signal 6' having a second phase profile and then to a corresponding optical signal 6" having a third phase profile, the integrity of the data being transmitted across the optical transmission system may be maintained. However, if some loss of data integrity occurs, said loss may be corrected in a manner known in the art. Stated differently, in accordance with the principles of this disclosure, an electrical signal input to an optical emitter 2 (e.g., optical emitter 2-1) and an electrical signal output from a corresponding optical receiver 34 (e.g., optical receiver 34-1) may be the same or may contain errors that may be correctable by one or more processes downstream of the optical receiver 34 in a manner known in the art.

Finally, as discussed above, the optical transmission system may include the array of optical receivers 34 disposed on the second substrate 36 for receiving the optical signals 6" having the third phase profiles output from the output side 28 of the optical demultiplexer 24. Each optical receiver 34 may be operative and/or configured for receiving and converting one of optical signals 6" having the third phase profiles output from the output side of the optical demultiplexer into a corresponding electrical signal which may be output for further processing in a manner known in the art.

In an example, the array of optical receivers 34 may include optical receivers 34-1 - 34-9, the second substrate 36 may have a circular shape, and the optical receivers 34-1 - 34-9 may be positioned or dispersed, uniformly or non-uniformly, at or adjacent around the periphery of the second substrate 36. However, the number of optical receivers 34 in the array may be any number deemed suitable and/or desirable for a particular application, including only a single optical receiver 34, and the second substrate 36 may have any suitable and/or desirable shape, such as, for example, oval, square, or rectangular. Moreover, the optical receiver(s) 34 may be disposed anywhere on the second substrate 36 deemed suitable and/or desirable for a particular application.

Strictly for the purpose of this disclosure, it will be assumed that the array of optical receivers 34 includes optical receivers 34-1 - 34-9 around the periphery of the second substrate 36. However, this is not to be construed in a limiting sense.

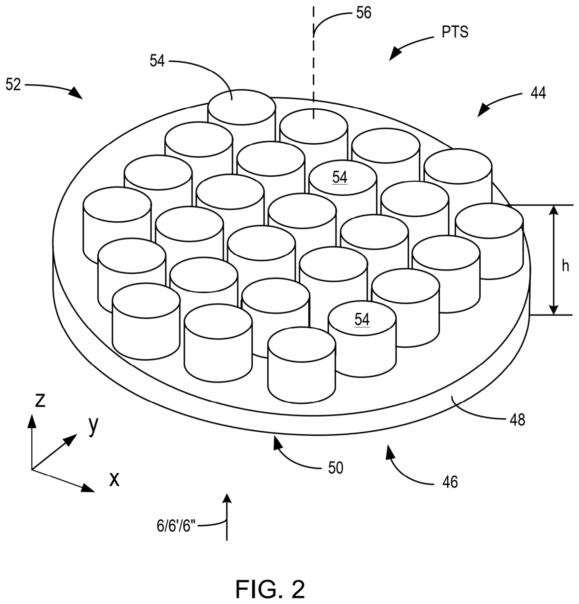

Having thus described an example optical transmission system in accordance with the principles of the present disclosure, non-limiting examples of PTSs that may be used, in any combination, in the example optical transmission system will now be described with reference to Figs. 2-7 and continuing reference to Fig. 1. In this disclosure, each PTS described hereinafter may comprise any one or more of the PTSs 14, 16, 30, and/or 32 described above that may be present in the optical transmission system shown in Fig. 1.

With reference to Fig. 2, and with continuing reference to all previous figures, one example PTS in accordance with the principles of the present disclosure may include a single, unified body 44 formed of a diffractive material which may include a first side 46 including a base 48 which may have a planar surface 50. A second side 52 of the body 44 may include an array of spaced projections or pillars 54, each of which may include an axis 56 that may extend, e.g., perpendicular, away from the planar surface 50. Herein, the terms first side 46 of the body 44 and second side 52 of the body 44 are not to be construed as limiting since it is envisioned that either side 46 or 52 of the body 44 of any one or more of the PTSs 14, 16, 30, and/or 32 may be positioned facing in a direction of the first substrate 4 or the second substrate 36 as may be deemed suitable and/or desirable.

In an example, each projection or pillar 54 may have a cylindrical shape, a circular cross-section, and a planar surface opposite the planar surface 50. The array of projections or pillars 54 may be spaced from each other and may have projections or pillars 54 that have different diameters. In the PTS shown in Fig. 2, all of the projections or pillars 54 may have the same height h from the planar surface 50.

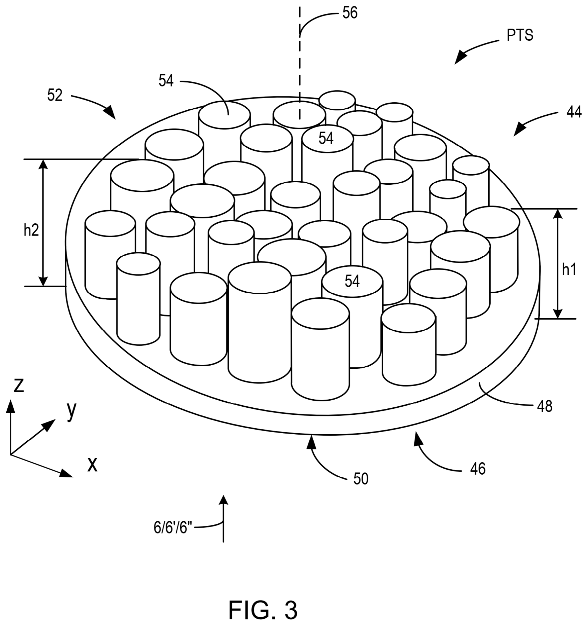

With reference to Fig. 3, and with continuing reference to all previous figures, the example PTS shown in Fig. 3 may be the same as the example PTS shown in Fig. 2 with the following exception: in Fig. 3, the array of projections or pillars 54 may have any number of different heights, e.g., heights h1 and h2, from the planar surface 50.

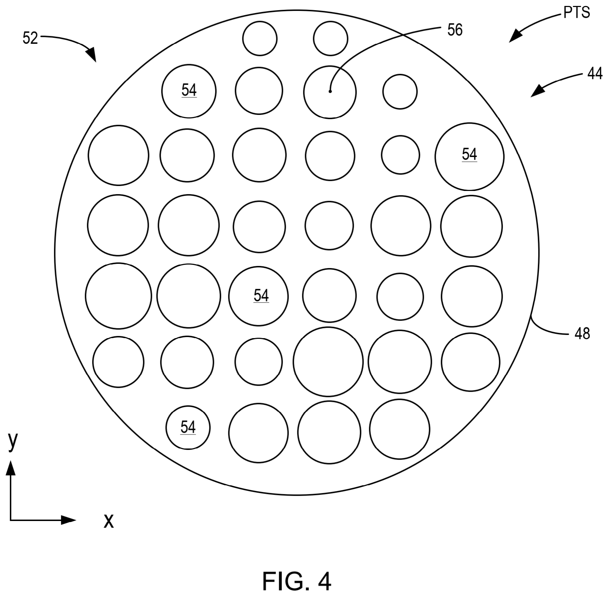

Fig. 4 is a plan view of the second side 52 of the PTSs shown in Fig. 2 and Fig. 3.

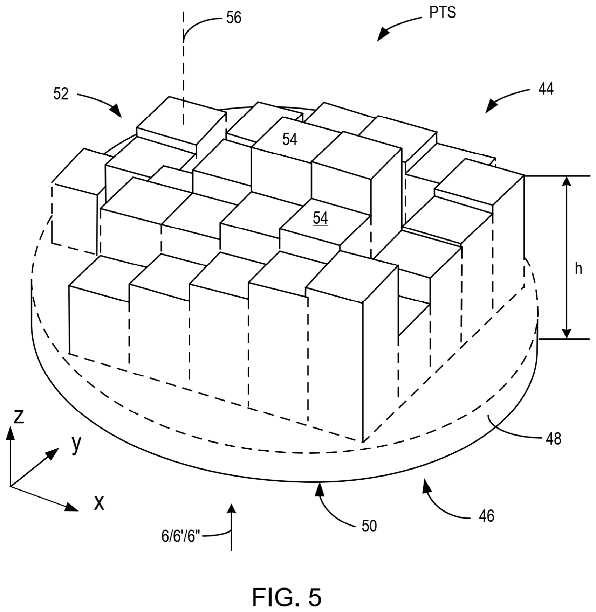

With reference to Fig. 5, and with continuing reference to all previous figures, another example PTS in accordance with the principles of the present disclosure may include a single, unified body 44 formed of a diffractive material which may include a first side 46 including a base 48 which may have a planar surface 50. A second side 52 of the body 44 may include an array of projections or pillars 54, each of which may include an axis 56 that may extend away from, e.g., perpendicular to, the planar surface 50. Herein, the terms first side 46 of the body 44 and second side 52 of the body 44 are not to be construed as limiting since it is envisioned that either side 46 or 52 of the body 44 of any one or more of the PTSs 14, 16, 30, and/or 32 may be positioned facing in a direction of the first substrate 4 or the second substrate 36 as may be deemed suitable and/or desirable.

In an example, each projection or pillar 54 may have an elongated cube or cuboid shape, a square or rectangular cross-section, and a planar surface opposite the planar surface 50. The array of projections or pillars 54 may be connected to each other and may have projections or pillars 54 that may have the same or different cross-sectional areas. However, this is not to be construed as limiting since it is envisioned that the array of projections or pillars 54 may be spaced from each other.

In the PTS shown in Fig. 5, each projection or pillar 54 may have a different height h from the planar surface 50 than immediately adjacent or connected pillars 54. However, this is not to be construed as limiting since it is envisioned that some or all of the projections or pillars 54 may be the same height from the planar surface 50.

Each elongated cube shaped projection or pillar 54 may extend from the base 48 that includes the planar surface 50 on one side of the base and the array of the projections or pillars 54 on another side of the base 48. In the example PTS shown in Fig. 5, the dashed lines, which indicate the extent of the elongated cube shaped projections or pillars 54, are shown only for reference purposes to aid in the description and understanding of the PTS shown in Fig. 5. To this end, it is to be appreciated that the PTS shown in Fig. 5, like the PTSs shown in Figs. 2 and 3, may be formed from a singular, unified body 44 that may be etched to form the projections or pillars 54 on the second side 44 of the PTS.

The spaces, or lack thereof, between adjacent projections or pillars 54 and/or the same or different heights of the projections or pillars 54 in the various examples of PTSs shown in Figs. 2-5 may encode phase change in the optical signal 6, or 6', or 6" that passes therethrough.

The example PTSs shown in Figs 2-5 illustrate axes 56 that extend perpendicular (± ~ 0.5°) to the planar surface 50. However, it is envisioned that one, or more, or all of the axes 56 may extend in any direction deemed suitable and/or desirable for a particular application. For example, in Fig. 1, PTS 14-1 may have the axes 56 of its array of projections or pillars 54 arranged or angled to cause the optical signal 6-1, having the first phase profile, received from optical emitter 2-1 to be projected or directed to PTS 16-1 which may have the axes 56 of its array of projections or pillars 54 arranged or angled, as necessary, to cause the optical signal 6-1', having the second phase profile, to be transmitted through the optical fiber 20. In an example, the optical signal 6-1 may pass through and be modified or converted by the diffractive nature of the material forming PTS 14-1, PTS 16-1, or some combination of PTSs 14-1 and 16-1 into the optical signal 6-1' having the second phase profile.

Continuing with this example, upon exiting the optical fiber 20, the optical signal 6-1' encounters PTS 32-1 which may have the axes 56 of its array of projections or pillars 54 arranged or angled to cause the optical signal 6-1', having the second phase profile, received from the optical fiber 20 to be projected or directed to PTS 30-1 which may have the axes 56 of its array of projections or pillars 54 arranged or angled, as necessary, to cause said optical signal 6-1" to be transmitted to the optical receiver 34-1. In an example, the optical signal 6-1' may pass through and be modified or converted by the diffractive nature of the material forming PTS 32-1, PTS 30-1, or some combination of PTSs 32-1 and 30-1 into the optical signal 6-1" having the third phase profile.

Similar comments apply in respect of the other PTSs 14-x, 16-x, 32-x, and 30-x and optical signals 6-x, 6-x', 6-x" shown in Fig. 1, wherein x = 2, 3, 4, 5, 6, 7, 8, or 9.

In an example, it is envisioned that the various features of the PTSs shown in Figs. 2-5 may be combined, mixed, and/or, matched in any manner deemed suitable and/or desirable by one skilled in the art for a particular application. For example, each elongated cube shaped projection or pillar 54 of Fig. 5 may extend from the base 48 in spaced relation to each other, e.g., like the cylindrical projections or pillars 54 shown in Figs. 2 and 3 extend from the base 48 in spaced relation to each other.

In another example, the array of projections or pillars 54 of the PTS shown in Fig. 5 may include projections or pillars 54 that may have the same height from the planar surface 50, like the cylindrical projections or pillars 54 shown in Fig. 2.

In another example, the array of projections or pillars 54 of the PTSs shown in Figs. 2-5 may include one or more areas or regions that include projections or pillars 54 of the same height and one or more other areas or regions that include projections or pillars 54 of different heights.

In another example, the shapes of the projections or pillars 54 of any of the PTSs shown in Figs. 2-5 may be different. For example, a subset of the projections or pillars 54 may have a first shape, e.g., without limitation, cylindrical with a circular cross-section, while another subset of the projections or pillars 54 may have a second shape, e.g., without limitation, a cube shaped with a square or rectangular projection.

Moreover, the shapes and/or cross-sections of the projections or pillars 54 described herein are not to be construed as limiting since it envisioned that one, some, or all of the projections or pillars 54 may have any shape and/or cross-section deemed suitable and/or desirable for a particular application, including projections or pillars 54 having different shapes and/or cross-sections.

Moreover, the PTSs 14, 16, 30, and/or 32 shown in Fig. 1 may comprise any combination of the PTSs shown in Figs. 2-5 and/or any combination of the features of the PTSs shown in Figs. 2-5.

Accordingly, the disclosure herein of the various features of the PTSs shown in Figs. 2-5 shown in Figs. 2-5 is not to be construed in a limiting sense.

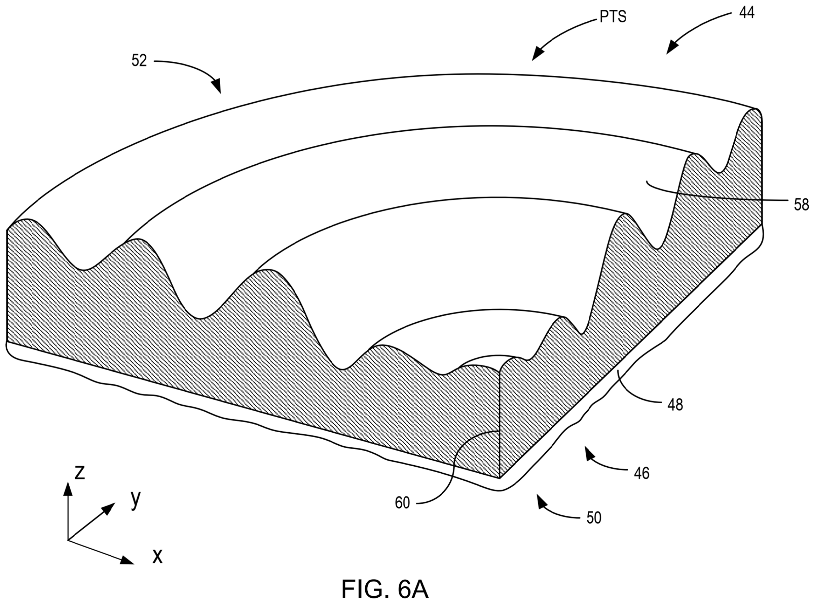

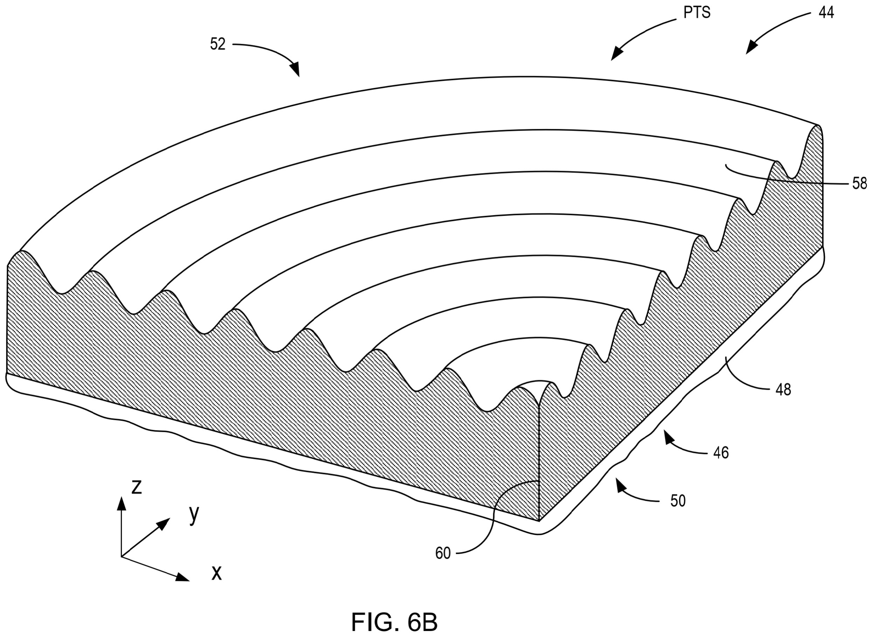

With reference to Figs. 6A and 6B, other example PTS's may include a single, unified body 44 formed of a diffractive material which may include a first side 46 including a base 48 which may have a planar surface 50. The second side 52 of the body 44 may include a continuously variable, undulating, or wavy surface 58.

The portions of the PTSs shown in Figs. 6A and 6B are isolated portions or segments of larger circular or disk-shaped PTSs. However, this is not to be in a limiting sense since each PTS described in this disclosure may have any shape deemed suitable and/or desirable for a particular application such as, for example, rectangular, circular, or square.

The illustrations of the continuously variable, undulating, or wavy surfaces 58 in Figs. 6A and 6B, having the same peak heights in the Z direction in arcs centered radially around a lower edge 60 of the portions or segments shown in Figs. 6A and 6B, are not to be construed in a limiting sense since these surfaces 58 may have any suitable and/ or desirable periodic and/or non-periodic forms of variable, undulating, or wavy surfaces 58 deemed suitable and/or desirable for an application. For example, the continuously variable, undulating, or wavy surfaces 58 may vary in height radially as shown in Figs. 6A and 6B, may vary in arcs centered radially around the lower edge 60 of the portions shown in Figs. 6A and 6B, or some combination thereof. Moreover, while the heights of the surfaces 58 in Figs. 6A and 6B are illustrated as varying continuously, it is envisioned that the heights of these surfaces 32 may vary discontinuously or some combination of continuously and discontinuously.

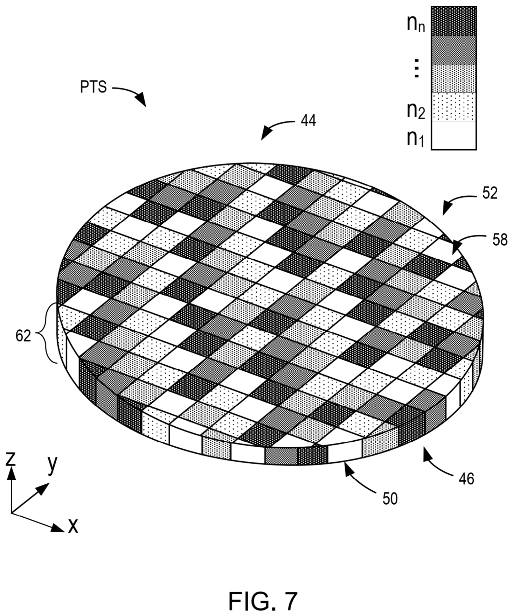

With reference to Fig. 7, another example PTS in accordance with the principles of the present disclosure may include a body 44 including on first and second sides 46 and 52 of the body 44 planar surfaces 50 and 58, respectively, that may be parallel to each other. Herein, the terms first side 46 of the body 44 and second side 52 of the body 44 are not to be construed as limiting since it is envisioned that either side 46 or 52 of the body 44 of any one or more of the PTSs 14, 16, 30, and/or 32 may be positioned facing in a direction of the first substrate 4 or the second substrate 34 as may be deemed suitable and/or desirable.

The example PTS shown in Fig. 7 includes proximate or adjacent sections having different refractive indices n₁- nₙ (see the scale in Fig. 7). In an example, each section n may have any suitable and/or desirable shape, e.g., square or a portion or section of a square, e.g., at the edge of the PTS, rectangular or portion or section of a rectangle, e.g., at the edge of the PTS, circular or portion or section of a circle, e.g., at the edge of the PTS, or some combination of these or other shapes as may be deemed suitable and/or desirable for an application. Accordingly, the example PTS shown in Fig. 7 is not to be construed in a limiting sense. In an example, the example PTS shown in Fig. 7 may have (except at, proximate, or adjacent an edge 62 of the body 44) a checkerboard pattern; a distorted checkerboard pattern where the grid or alignment is warped or irregular; an asymmetrical checkerboard pattern that lacks uniformity in size, spacing and/or arrangement; an irregular checkerboard pattern where the sections having the different refractive indices n₁- nₙ may vary in shape, size, or arrangement; and/or a randomized checkerboard pattern where the sections having the different refractive indices n₁- nₙ may be randomly positioned or altered. However, this is not to be construed in a limiting sense since it is envisioned that body 24 of example PTS shown in Fig. 7 may include plural areas of different refractive indices or any shape and/or size that may extend between the first and second sides 46 and 52 of the body 44.

Other non-limiting examples or aspects of this disclosure are set forth in the following illustrative and exemplary numbered clauses:
Clause 1: An optical transmission system comprising: an array of optical emitters disposed on a first substrate, wherein each optical emitter may be operative and/or configured for converting an electrical signal received by the optical emitter into a corresponding optical signal having a first phase profile; an optical multiplexer having an input side disposed to receive the optical signals from the array of optical emitters and an output side, wherein the optical multiplexer includes one or more PTSs operative and/or configured for converging the optical signals received at the input side of the optical multiplexer, for modifying and/or converting the first phase profile of each optical signal to a second phase profile, and for outputting the converged optical signals having the second phase profiles from the output side of the optical multiplexer, wherein each converged optical signal having the second phase profile output from the output side of the optical multiplexer has a unique phase that may be different than the phase of each other converged optical signal having the second phase profile output from the output side of the optical multiplexer; an optical fiber having an input end disposed to receive the optical signals having the second phase profiles output from the output side of the optical multiplexer and to output the optical signals having the second phase profiles from an output end of the optical fiber; an optical demultiplexer having an input side disposed to receive the optical signals having the second phase profiles output from the output end of the optical fiber and an output side, wherein the optical demultiplexer includes one or more PTSs operative and/or configured for modifying and/or converting the second phase profile of each optical signal to a third phase profile and for outputting the optical signals having the third phase profiles from the output side of the optical demultiplexer; and an array of optical receivers disposed on a second substrate for receiving the optical signals having the third phase profiles output from the output side of the optical demultiplexer, wherein each optical receiver may be operative and/or configured for receiving and converting one of the optical signals having the third phase profile output from the output side of the optical demultiplexer into a corresponding electrical signal.
Clause 2: The optical transmission system of clause 1, wherein the optical demultiplexer may also be operative and/or configured for diverting the optical signals having the third phase profiles output from the output side of the optical demultiplexer.
Clause 3: The optical transmission system of clause 1 or 2, wherein the one or more PTSs of the optical multiplexer may include: a first set of PTSs operative and/or configured for causing the optical signals received at the input side of the optical multiplexer to converge; and/or a second set of PTSs operative and/or configured for causing the first phase profiles of the optical signals received at the input side of the optical multiplexer to be modified to the second phase profiles, and outputting the signals having the second phase profiles to the input end of the optical fiber.
Clause 4: The optical transmission system of any one of clauses 1-3, wherein the first and second sets of PTSs may be disposed on the input and output sides, or vice versa, of the optical multiplexer.
Clause 5: The optical transmission system of any one of clauses 1-4, wherein the one or more PTSs of the optical demultiplexer may include a third set of PTSs operative and/or configured for causing the second phase profile of each optical signal received from the output end of the optical fiber to be modified or converted to the third phase profile of the optical signal.
Clause 6: The optical transmission system of any one of clauses 1-5, wherein the one or more PTSs of the optical demultiplexer may include a fourth set of PTSs operative and/or configured for causing the optical signals received from the output end of the optical fiber to be diverted and output to the array of optical receivers.
Clause 7: The optical transmission system of any one of clauses 1-6, wherein the third and fourth sets of PTSs may be disposed on the input and output sides, or vice versa, of the optical demultiplexer.
Clause 8: The optical transmission system of any one of clauses 1-7, wherein: each first phase profile may include one of the following: no or zero orbital angular momentum, a clockwise orbital angular momentum, or a counterclockwise (or anticlockwise) orbital angular momentum; each second phase profile may include one of the following: a clockwise orbital angular momentum or a counterclockwise (or anticlockwise) orbital angular momentum; and each third phase profile may include one of the following: no or zero orbital angular momentum, a clockwise orbital angular momentum, or a counterclockwise (or anticlockwise) orbital angular momentum.
Clause 9: The optical transmission system of any one of clauses 1-8, wherein the optical multiplexer and the optical demultiplexer may be operative and/or configured whereupon there may be a one-to-one correspondence between one of the optical emitters and one of the optical receivers, whereupon the optical signal output by the one optical emitter may be received by the one optical receiver, and said optical signal may be modified and/or converted from the first phase profile to the second phase profile and from the second phase profile to the third phase profile as said optical signal passes through the optical multiplexer and the optical demultiplexer.
Clause 10: The optical transmission system of any one of clauses 1-9, wherein each optical emitter may operate at a same or a different frequency or wavelength.
Clause 11: The optical transmission system of any one of clauses 1-10, wherein each PTS may comprise a diffractive optical element.
Clause 12: The optical transmission system of any one of clauses 1-11, wherein each diffractive optical element may comprise: an array of projections, pillars, or extrusions; or a continuously and/or discontinuously varying, undulating, or wavy surface.
Clause 13: The optical transmission system of any one of clauses 1-12, wherein the optical fiber may be a multi-mode optical fiber.
Clause 14: The optical transmission system of any one of clauses 1-13, wherein each second phase profile may comprise orbital angular momentum (OAM) and the OAM of each optical signal having said second phase profile comprising OAM may be preserved as said optical signal travels through the optical fiber or through free space.
Clause 15: An optical transmission method comprising: (a) converting, by an array of optical emitters, a set of electrical signals into a corresponding first set of optical signals having first phase profiles; (b) modifying and/or converting, by an optical multiplexer, the first set of optical signals of step (a) having the first phase profiles to a second set of optical signals having second phase profiles that may be different than the first phase profiles, wherein each optical signal of the second set of optical signals has a unique second phase profile; (c) transmitting, through an optical fiber, the second set of optical signals having the second phase profiles of step (b); (d) modifying and/or converting, by an optical demultiplexer, the second set of optical signals having the second phase profiles transmitted in step (c) to a third set of optical signals having third phase profiles; (e) receiving, by an array of optical receivers, the third set of optical signals having the third phase profiles of step (d); and (f) converting, by the array of optical receivers, the third set of optical signals having the third phase profiles received in step (e) into a copy of the set of electrical signals of step (a).
Clause 16: The optical transmission method of clause 15, wherein the second set of optical signals transmitted in step (c) may comprise orbital angular momentums (OAMs) that may be preserved as the second set of optical signals travel through the optical fiber.
Clause 17: The optical transmission method of clause 15 or 16, wherein the third phase profiles of the third set of optical signals may be different than the second phase profiles of the second set of optical signals.
Clause 18: The optical transmission method of any one of clauses 15-17, wherein the optical fiber may be a multi-mode optical fiber.
Clause 19: The optical transmission method of any one of clauses 15-18, wherein: the optical multiplexer may include at least one PTS for performing the modifying and/or converting of step (b); and/or the optical demultiplexer may include at least one PTS for performing the modifying and/or converting of step (d).
Clause 20: The optical transmission method of any one of clauses 15-19, wherein step (d) may include diverting each optical signal of the third set of optical signals having the third phase profiles, wherein said diverting may be based on the phase of the third phase profile of said optical signal.
Clause 21: The optical transmission method of any one of clauses 15-20, wherein each second phase profile may OAM and the OAMs of the second set of optical signals having the second phase profiles transmitted through the optical fiber in step (c) or through free space may be preserved.

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. An optical transmission system comprising:
an array of optical emitters disposed on a first substrate, wherein each optical emitter is operative and/or configured for converting an electrical signal received by the optical emitter into a corresponding optical signal having a first phase profile;
an optical multiplexer having an input side disposed to receive the optical signals from the array of optical emitters and an output side, wherein the optical multiplexer includes one or more phase transformation surfaces (PTSs) operative and/or configured for converging the optical signals received at the input side of the optical multiplexer, for modifying and/or converting the first phase profile of each optical signal to a second phase profile, and for outputting the converged optical signals having the second phase profiles from the output side of the optical multiplexer, wherein each converged optical signal having the second phase profile output from the output side of the optical multiplexer has a unique phase that is different than the phase of each other converged optical signal having the second phase profile output from the output side of the optical multiplexer;
an optical fiber having an input end disposed to receive the optical signals having the second phase profiles output from the output side of the optical multiplexer and to output the optical signals having the second phase profiles from an output end of the optical fiber;
an optical demultiplexer having an input side disposed to receive the optical signals having the second phase profiles output from the output end of the optical fiber and an output side, wherein the optical demultiplexer includes one or more PTSs operative and/or configured for modifying and/or converting the second phase profile of each optical signal to a third phase profile and for outputting the optical signals having the third phase profiles from the output side of the optical demultiplexer; and
an array of optical receivers disposed on a second substrate for receiving the optical signals having the third phase profiles output from the output side of the optical demultiplexer, wherein each optical receiver is operative and/or configured for receiving and converting one of the optical signals having the third phase profile output from the output side of the optical demultiplexer into a corresponding electrical signal.

2. The optical transmission system of claim 1, wherein the optical demultiplexer is also operative and/or configured for diverting the optical signals having the third phase profiles output from the output side of the optical demultiplexer.

3. The optical transmission system of claim 1, wherein the one or more PTSs of the optical multiplexer includes:
a first set of PTSs operative and/or configured for causing the optical signals received at the input side of the optical multiplexer to converge; and
a second set of PTSs operative and/or configured for causing the first phase profiles of the optical signals received at the input side of the optical multiplexer to be modified to the second phase profiles, and outputting the signals having the second phase profiles to the input end of the optical fiber.

4. The optical transmission system of claim 3, wherein the first and second sets of PTSs are disposed on the input and output sides, or vice versa, of the optical multiplexer.

5. The optical transmission system of claim 3, wherein the one or more PTSs of the optical demultiplexer includes a third set of PTSs operative and/or configured for causing the second phase profile of each optical signal received from the output end of the optical fiber to be modified or converted to the third phase profile of the optical signal, preferably wherein the one or more PTSs of the optical demultiplexer includes a fourth set of PTSs operative and/or configured for causing the optical signals received from the output end of the optical fiber to be diverted and output to the array of optical receivers, more preferably wherein the third and fourth sets of PTSs are disposed on the input and output sides, or vice versa, of the optical demultiplexer.

6. The optical transmission system of claim 1, wherein:
each first phase profile includes one of the following: no or zero orbital angular momentum, a clockwise orbital angular momentum, or a counterclockwise (or anticlockwise) orbital angular momentum;
each second phase profile includes one of the following: a clockwise orbital angular momentum or a counterclockwise (or anticlockwise) orbital angular momentum; and
each third phase profile includes one of the following: no or zero orbital angular momentum, a clockwise orbital angular momentum, or a counterclockwise (or anticlockwise) orbital angular momentum.

7. The optical transmission system of claim 1, wherein the optical multiplexer and the optical demultiplexer are operative and/or configured whereupon there is a one-to-one correspondence between one of the optical emitters and one of the optical receivers, whereupon the optical signal output by the one optical emitter is received by the one optical receiver, and said optical signal is modified and/or converted from the first phase profile to the second phase profile and from the second phase profile to the third phase profile as said optical signal passes through the optical multiplexer and the optical demultiplexer.

8. The optical transmission system of claim 1, wherein each optical emitter operates at a same or a different frequency or wavelength.

9. The optical transmission system of claim 1, wherein each PTS comprises a diffractive optical element, preferably wherein each diffractive optical element comprises:
an array of projections, pillars, or extrusions; or
a continuously and/or discontinuously varying, undulating, or wavy surface.

10. The optical transmission system of claim 1, wherein each second phase profile comprises orbital angular momentum (OAM) and the OAM of each optical signal having said second phase profile comprising OAM is preserved as said optical signal travels through the optical fiber or through free space.

11. An optical transmission method comprising:
(a) converting, by an array of optical emitters, a set of electrical signals into a corresponding first set of optical signals having first phase profiles;
(b) modifying and/or converting, by an optical multiplexer, the first set of optical signals of step (a) having the first phase profiles to a second set of optical signals having second phase profiles that are different than the first phase profiles, wherein each optical signal of the second set of optical signals has a unique second phase profile;
(c) transmitting, through an optical fiber, the second set of optical signals having the second phase profiles of step (b);
(d) modifying and/or converting, by an optical demultiplexer, the second set of optical signals having the second phase profiles transmitted in step (c) to a third set of optical signals having third phase profiles;
(e) receiving, by an array of optical receivers, the third set of optical signals having the third phase profiles of step (d); and
(f) converting, by the array of optical receivers, the third set of optical signals having the third phase profiles received in step (e) into a copy of the set of electrical signals of step (a).

12. The optical transmission method of claim 11, wherein the second set of optical signals transmitted in step (c) comprise orbital angular momentums (OAMs) that are preserved as the second set of optical signals travel through the optical fiber, preferably wherein the third phase profiles of the third set of optical signals is different than the second phase profiles of the second set of optical signals.

13. The optical transmission method of claim 11, wherein:
the optical multiplexer includes at least one phase transformation surface for performing the modifying and/or converting of step (b); and
the optical demultiplexer includes at least one phase transformation surface for performing the modifying and/or converting of step (d).

14. The optical transmission method of claim 11, wherein step (d) includes diverting each optical signal of the third set of optical signals having the third phase profiles based on the phase of the third phase profile of said optical signal.

15. The optical transmission method of claim 11, wherein each second phase profile comprises an orbital angular momentum (OAM) and the OAMs of the second set of optical signals having the second phase profiles transmitted through the optical fiber in step (c), or through free space, are preserved.
